# EUROPÄISCHE PATENTSCHRIFT

(11) **EP 3 621 900 B1**
(45) Veröffentlichungstag und Bekanntmachung des Hinweises auf die Patenterteilung: **15.04.2026**
(21) Anmeldenummer: 18724844.8
(22) Anmeldetag: 11.05.2018
(51) Int. Cl.: B65G 1/04, B65G 1/00, B65G 1/02, B65G 1/08

(54) **WARENAUSGANGSPUFFER FÜR EINE KOMMISIONIERANLAGE**
GOODS OUTPUT BUFFER FOR A COMMISSIONING FACILITY
TAMPON DE SORTIE DE MARCHANDISES POUR UNE INSTALLATION DE PRÉPARATION DES COMMANDES

(30) Priorität: 12.05.2017 DE 102017110373
(43) Veröffentlichungstag der Anmeldung: 18.03.2020
(73) Patentinhaber: WITRON Logistik + Informatik GmbH & Co. KG, 92711 Parkstein (DE)
(72) Erfinder: WINKLER, Walter, 92711 Parkstein (DE)
(74) Vertreter: Betten & Resch
(86) Internationale Anmeldenummer: PCT/EP2018/062264
(87) Internationale Veröffentlichungsnummer: WO 2018/206801

(56) Entgegenhaltungen:
- EP-A1- 1 213 242
- EP-A1- 1 406 051
- EP-A1- 3 023 364
- EP-A2- 1 972 874
- WO-A1-2009/150684
- WO-A1-2011/129699
- DE-A1- 3 037 634
- DE-A1- 3 702 248
- FR-A1- 2 337 675
- NL-A- 7 804 502
- US-A- 3 982 639
- US-A- 4 582 188

## Beschreibung

### HINTERGRUND DER ERFINDUNG

### GEBIET DER ERFINDUNG

Die vorliegende Erfindung betrifft eine Kommissionieranlage für das Kommissionieren von verschiedenen Waren zu Wareneinheiten sowie einen Warenausgangspuffer für eine derartige Kommissionieranlage.

### STAND DER TECHNIK

In Einzelhandelsgeschäften, wie beispielsweise Lebensmitteleinzelhandelsgeschäften, werden eine Vielzahl von unterschiedlichen Waren vertrieben. Entsprechend ist es den Einzelhandelsgeschäften nicht möglich, die Waren in einer großen Stückzahl vorzuhalten, weil dies einen außerordentlich hohen Platzbedarf erfordern würde. Dem gegenüber sind jedoch Großhändler oder Hersteller von Waren nicht daran interessiert, einzelne Waren an Einzelhandelsgeschäfte auszuliefern, da dies einen hohen Aufwand bedeutet. Entsprechend besteht die Notwendigkeit, in Versandlagern oder Versorgungszentren eine Kommissionierung von Waren durchzuführen, wobei sortenreine Waren von den Herstellern in großen Mengen bzw. großen Packeinheiten angeliefert werden und nach einer Auflösung der großen Packeinheiten in einzelne Waren oder kleinere Packeinheiten diese dann an die Einzelhandelsgeschäfte weitergegeben werden. Gleichzeitig werden verschiedene Waren, die beispielsweise an ein Einzelhandelsgeschäft geliefert werden sollen, zur Vereinfachung des Transports wieder zu Wareneinheiten zusammengefasst. Entsprechend kann als Kommissioniervorgang eine Vereinzelung oder Verkleinerung von großen sortenreinen Packeinheiten und Zusammenstellung von verschiedenen Waren in einer neuen Wareneinheit gesehen werden.

Dies betrifft nicht nur die Versorgung von Filialen von Einzelhandelsketten, wie beispielsweise Lebensmittelketten, sondern auch die Belieferung von Kunden von Versandhändlern. Durch die Vielzahl von unterschiedlichen Waren, die bei derartigen Kommissioniervorgängen gehandhabt werden müssen, kommen auch unterschiedliche Verpackungsformen für die Her- Stellung der fertig kommissionierten Wareneinheiten in Frage. So werden beispielsweise im Lebensmitteleinzelhandel sowohl Paletten in Form von sogenannten EU-Standard-Paletten verwendet, auf denen die Waren einfach gestapelt werden, als auch sogenannte Rollcontainer eingesetzt, die eine Plattform zur Lagerung der Waren, sowie Seitenwände zur Stützung der Waren und Rollen an der Unterseite der Plattform zum Bewegen der Rollcontainer umfassen. Darüber hinaus könne weitere andersartige Träger für Wareneinheiten aus mehreren unterschiedlichen Waren vorgesehen werden. Durch die unterschiedlichen Träger, wie beispielsweise Paletten, Rollcontainer oder andersartige Träger ist es schwierig, die Handhabung der Wareneinheiten beim Warenausgang effektiv zu gestalten.

Darüber hinaus besteht eine weitere Schwierigkeit darin, eine zeitliche Abstimmung des Kommissioniervorgangs und der Ausgabe der kommissionierten Wareneinheiten am Warenausgang zu erzielen. Werden die Waren zu früh in entsprechende Wareneinheiten kommissioniert, so müssen sie zwischengelagert werden, bis das entsprechende Transportfahrzeug zum Transport der kommissionierten Wareneinheiten an den Empfänger zur Abholung bereit steht. Dies kann dazu führen, dass notwendige Verkehrswege in der Kommissonieranlage verstopft werden. Wird jedoch mit der Kommissionierung der Wareneinheiten zu spät begonnen, kann dies zu unerwünschten Wartezeiten und Standzeiten für die Transportfahrzeuge, wie LKWs, bei der Belieferung von Einzelhandelsgeschäften führen.

Die EP 3 023 364 A1 betrifft ein Regalbediengerät zur Ein - und Auslagerung von Gegenständen in ein Regal mit einem Lastaufnahmemittel zur Aufnahme der ein - und auszulagernden Gegenstände auf dem Regalbediengerät, einer Greifeinrichtung zum Ergreifen der ein - und auszulagernden Gegenstände und zum Bewegen der Gegenstände aus dem Regal auf das Lastaufnahmemittel und/oder vom Lastaufnahmemittel in das Regal, einem Fahrgestell, welches zum Bewegen des Regalbediengeräts auf einer ersten Ebene entlang mindestens eines Regals dient, einer Hubeinrichtung, die am Fahrgestell angeordnet ist und an der das Lastaufnahmemittel angeordnet ist und dazu dient das Lastaufnahmemittel entlang einer Richtung zu bewegen, die quer zur ersten Ebene verläuft, wobei die Greifeinrichtung so ausgebildet ist, dass mehrere unterschiedliche Arten von Gegenstände gehandhabt werden können.

### OFFENBARUNG DER ERFINDUNG

### AUFGABE DER ERFINDUNG

Es ist deshalb Aufgabe der vorliegenden Erfindung, einen Warenausgangspuffer einer Kommissionieranlage bereitzustellen, der sowohl mit unterschiedlichen Trägern für die verschiedenen Waren umgehen können und darüber hinaus einen effektiven Warenausgang gewährleisten. Darüber hinaus soll die erfindungsgemäße Lösung technisch einfach realisierbar und handhabbar sein.

### TECHNISCHE LÖSUNG

Diese Aufgabe wird gelöst durch einen Warenausgangspuffer einer Kommissionieranlage mit den Merkmalen des Anspruchs 1. Weitere Ausführungsbeispiele der Erfindung sind in den abhängigen Ansprüchen beansprucht.

### KURZBESCHREIBUNG DER FIGUREN

Die beigefügten Figuren zeigen in rein schematischer Weise in
- Fig. 1: eine Übersicht über eine Kommissionieranlage mit einem erfindungsgemäßen Warenausgangspuffer;
- Fig. 2: eine Schnittansicht durch einen Warenausgangspuffer;
- Fid.3: eine Draufsicht auf einen Horizontalschnitt durch den Warenausgangspuffer der Figur 2;
- Fig.4: eine Detailansicht des Warenausgangspuffers gemäß Figur 2;
- Fig.5: Seitendarstellungen eines erfindungsgemäßen Regalbediengeräts mit verstellbaren Hebemitteln in den Teilbildern a) bis c);
- Fig.6: eine Schnittansicht durch Regalfächer eines Regals des Warenausgangspuffers beim Beladen bzw. Entnehmen von Wareneinheiten in den Teilbildern a) und b);
- Fig.7: eine Seitenansicht einer ersten Ausführungsform einer erfindungsgemäßen Schwerkraft - Förderbahn eines Warenausgangspuffers;
- Fig.8: eine Draufsicht auf die Schwerkraft - Förderbahn aus Figur 7;
- Fig.9: eine weitere Draufsicht auf die Schwerkraft - Förderbahn aus Figur 7;
- Fig.10: eine Seitenansicht in Richtung der Transportrichtung einer zweiten Ausführungsform einer Schwerkraft - Förderbahn;
- Fig.11: eine Seitenansicht gemäß Figur 10 im Betrieb mit einer Palette; Fig.12 eine Seitenansicht der Schwerkraft- Förderbahn gemäß Figur 10 in Betrieb mit einem Rollcontainer; und in
- Fig.13 bis Fig.15: Seitenansichten der Schwerkraft-Förderbahn aus Figuren 10 bis 12 zur Veranschaulichung der Wirkungsweise des Mitnehmerwagens.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele anhand der beigefügten Figuren deutlich. Allerdings ist die Erfindung nicht auf diese Ausführungsbeispiele beschränkt.

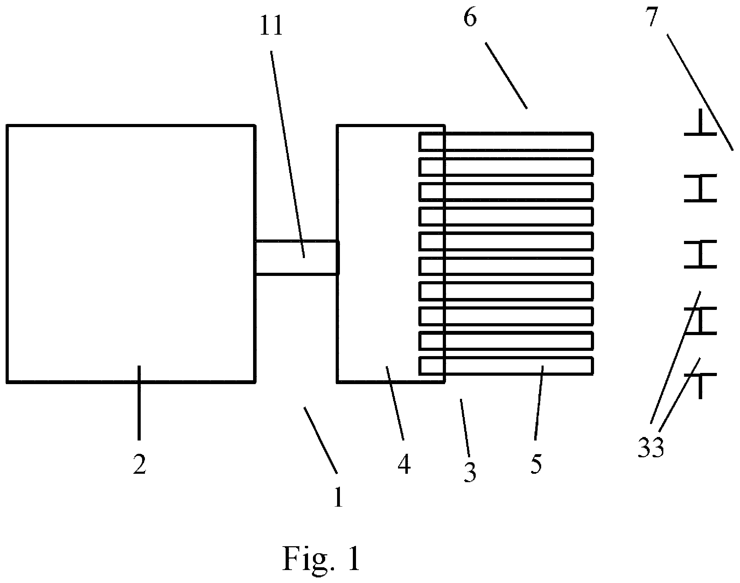

Die Figur 1 zeigt eine schematische Darstellung einer erfindungsgemäßen Kommissionieranlage 1, die einen Kommissionierbereich 2 und einen Warenausgangspuffer 3 umfasst. Im Kommissionierbereich 2 erfolgt der Wareneingang von gleichen Waren, die in größeren Packeinheiten zusammengefasst sind, wobei diese Packeinheiten im Kommissionierbereich 2 bis hin zu Einzelwaren aufgelöst werden, um Wareneinheiten mit unterschiedlichen Waren für den weiteren Versand zusammenzustellen. Dies ist beispielsweise bei Versandlagern der Fall, von denen aus Einzelhandelsgeschäfte mit den unterschiedlichen Waren des Sortiments versorgt werden. Im Versandlager bzw. der entsprechenden Kommissionieranlage, die das Versandlager bildet oder in diesem integriert ist, werden somit eine Vielzahl von unterschiedlichen Waren aus Packeinheiten mit sortenreinen Waren in Wareneinheiten mit gemischten Waren umgepackt, um die einzelnen Läden mit geringeren Mengen versorgen zu können. Auf diese Weise ist es möglich, dass die Hersteller der Waren diese in großen Mengen und Packeinheiten anliefern, während nach der Kommissionierung Wareneinheiten zum Versand an die einzelnen Ladengeschäfte vorliegen, bei denen in einer Wareneinheit unterschiedlichste Waren enthalten sind. Das gleiche Kommissionierprinzip kann auch bei Versandhändlern angewandt werden, die ebenfalls unterschiedlichste Waren in großen Mengen beziehen und unter- schiedlich zusammengestellte Waren an die einzelnen Kunden verschicken. Entsprechend ist üblicherweise im Kommissionierbereich ein entsprechendes Lager für die sortenreinen Packeinheiten vorgesehen oder es ist ein entsprechendes Lager an den Kommissionierbereich 2 angegliedert, sodass im Kommissionierbereich 2 die sortenreinen Packeinheiten für die Kommissionierung bereitgestellt werden können.

Die erfindungsgemäße Kommissionieranlage 1 umfasst neben dem Kommissionierbereich 2 einen Warenausgangspuffer 3, welcher einen Lagerbereich 4 und einen Bereitstellungsbereich 6 umfasst. Im gezeigten Ausführungsbeispiel sind im Bereitstellungsbereich 6 eine Vielzahl von Schwerkraft - Förderbahnen 5 vorgesehen, wobei jedoch der Bereitstellungsbereich 6 auch anders gestaltet werden kann, auch wenn die Schwerkraft - Förderbahnen 5, wie später noch gezeigt wird, vorteilhaft sind. Unmittelbar in der Nähe des Bereitstellungsbereichs 6 und diesem zugeordnet ist der Warenausgang mit beispielsweise einer Verladerampe 7 mit Ausgang stören 33 angeordnet.

Zwischen dem Warenausgangspuffer 3 und dem Kommissionierbereich 2 ist ein Wareneinheitenübergang 11 vorgesehen, über dem die kommissionierten Wareneinheiten in den Warenausgangspuffer 3 überführt werden können. Statt dem in Figur 1 gezeigten einzelnen Wareneinheitenübergang 11 können mehrere Wareneinheitenübergänge vorgesehen sein und zudem können By - Pass - Transportwege (nicht gezeigt) vorgesehen sein, die eine unmittelbare Ausgabe der fertig kommissionierten Wareneinheiten in den Warenausgang an dem Warenausgangspuffer 3 vorbei ermöglichen.

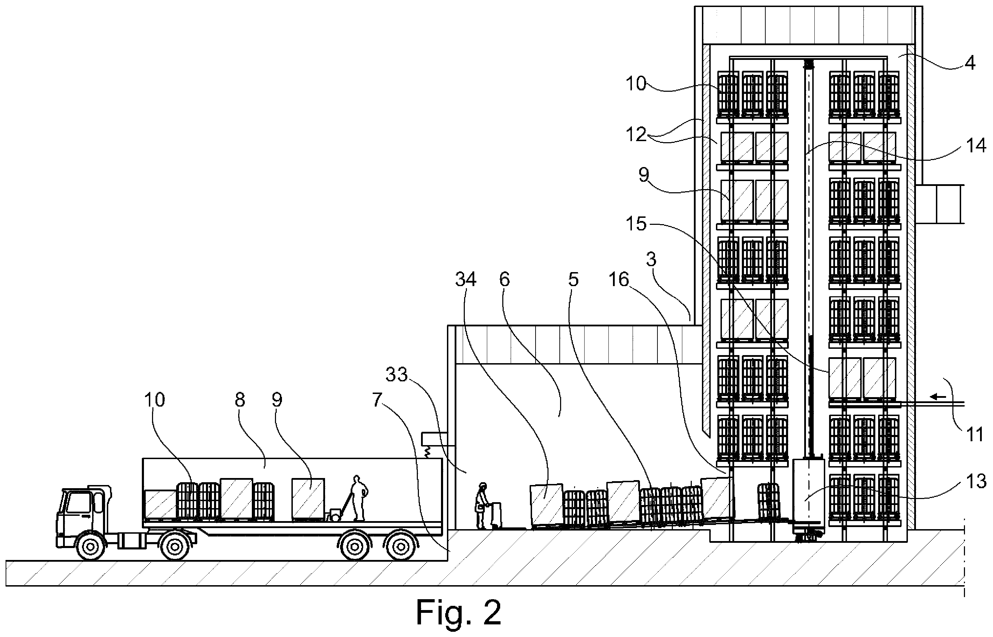

Die Figur 2 zeigt den erfindungsgemäßen Warenausgangspuffer 3 in einer Schnittdarstellung, wobei zu erkennen ist, dass der Lagerbereich 4 beim gezeigten Ausführungsbeispiel als Palettenregallager ausgeführt ist.

Das Palettenregallager weist eine Vielzahl von Regalfächern 12 auf, in die unterschiedliche Wareneinheiten 9, 10 eingelagert werden können. Bei der Wareneinheit 9 handelt es beispielsweise sich um einen Palettenstapel, der auf einer Euro-Palette gelagert ist, während es sich bei der Wareneinheit 10 um einen Rollcontainer handelt.

Wie aus der Figur 2 zu entnehmen ist, sind die Regalfächer 12 so ausgebildet, dass drei Rollcontainer 10 oder zwei Paletten 9 hintereinander eingelagert werden können. Das Palettenregallager umfasst insgesamt 2 Regale, zwischen denen eine Lagergasse ausgebildet ist, entlang der sich ein Regalfahrzeug 13 bewegen kann. Zusätzlich ist eine Palettenaufnahme des Regalbediengeräts 13 entlang eines Masts 14 in der Höhe verstellbar, sodass entlang einer Ebene, die durch die Lagergasse und die vertikale Richtung hierzu aufgespannt ist, die Palettenaufnahme des Regalbediengeräts 13 jedes Regalfach 12 des Palettenregallagers erreichen kann, um so Wareneinheiten 9, 10 in die Regalfächer 12 des Palettenregallagers einzulagern oder aus diesem auszulagern. Hierzu weist das Regalfahrzeug 13, wie später noch gezeigt wird, in Richtung der Regalfächer teleskopierbare Hebemittel in Form von Zinken auf, die eine Entnahme der Wareneinheiten 9, 10 oder ein Einlagern der Wareneinheiten 9, 10 in die Regalfächer 12 ermöglichen.

In das Palettenregallager sind auch die Einlagerungsstelle 15 und die Auslagerungsstellen 16 integriert, wobei sowohl die Einlagerungsstelle 15 als auch die Auslagerungsstelle 16 jeweils im Bereich eine Regalfachs angeordnet sind.

Die Einlagerungsstelle 15 ist das Ende des Wareneinheitenübergangs 11, wobei dieser eine beliebige Förderbahn umfassen kann, die Wareneinheiten aus dem Kommissionierbereich 2 zur Übergabe in den Warenausgangspuffer anliefert. Aus dem Kommissionierbereich werden über den Wareneinheitenübergang 11 somit die fertig kommissionierten Wareneinheiten 9,10 bis zur Einlagerungsstelle 15 als dem Übergabepunkt transportiert, wo das Regalfahrzeug 13 die Wareneinheiten 9,10 übernehmen und in die Regalfächer 12 des Regalbereichs 4 einlagern kann.

Darüber hinaus umfasst der Lagerbereich 4 des Warenausgangspuffers 3 eine Vielzahl von Warenausgangsstellen 16, die zugleich den Eingang für den Bereitstellungsbereich bilden. Bei der vorliegenden Ausführungsform sind sämtliche Regalfächer der untersten Ebene entlang des ausgabeseitigen Regals als Warenausgangsstellen 16 ausgebildet, sodass die den Bereitstellungsbereich bildenden Schwerkraft - Förderbahnen 5 in das entsprechende Regal hinein ragen. Beim Auslagern der Wareneinheiten 9,10 aus dem Lagerbereich 4 des Warenausgangspuffers 3 holt somit das Regalbediengerät 13 die auszulagernden Wareneinheiten 9,10 aus den Regalfächern 12 und stellt sie auf die Schwerkraft- Förderbahnen 5 des Bereitstellungsbereich bzw. an den Ausgangsstellen 16 ab. Von dort bewegen sich die Wareneinheiten automatisch auf der Schwerkraft - Förderbahn zu einer Entnahmestelle, von der sie zur Beladung eines LKWs aus dem Bereitstellungsbereich entnommen werden können.

Durch eine programmtechnisch eingerichtete Datenverarbeitungsanlage wird die Einlagerung von Wareneinheiten in den Lagerbereich 4 des Warenausgangspuffers 3 und deren Bereitstellung im Bereitstellungsbereich bzw. in den Schwerkraft - Förderbahnen 5 gesteuert. Dies ist vorzugsweise in die datentechnische Steuerung der gesamten Kommissionieranlage integriert. So wird durch die Kommissionieranlage zunächst der Eingang von Kommissionieraufträgen erfasst und eine entsprechende Kommissionierung gesteuert und überwacht. Mit dem Warenausgangspuffer 3 kann die Kommissionierung nunmehr unabhängig von einem vorbestimmten oder erwarteten Warenausgangszeitpunkt stattfinden, da die fertig kommissionierten Wareneinheiten im Warenausgangspuffer 3 zwischengelagert bzw. gepuffert werden können. Zu der vorbestimmten oder gewünschten Warenausgangszeit werden dann die fertig kommissionierten Wareneinheiten 9,10 aus dem Lagerbereich 4 des Warenausgangspuffers 3 in den Bereitstellungsbereich überführt, von wo sie direkt in ein entsprechendes Transportfahrzeug, wie einen LKW, eingeladen werden können. Durch eine entsprechende Softwaresteuerung können die Wareneinheiten 9,10 in einer gewünschten Reihenfolge im Bereitstellungsbereich bereit gehalten werden, die einer gewünschten Beladekonfiguration für den LKW 8 entspricht. Diese Beladekonfiguration kann sich beispielsweise nach der Route der anzufahrenden Empfänger und/oder einer notwendigen oder gewünschten Gewichtsverteilung im LKW 8 richten. Wenn die Wareneinheiten 9,10 im Bereitstellungsbereich 6 angeordnet sind, kann ein LKW- Fahrer, der die kommissionierten Wareneinheiten abholen soll, ein dem Bereitstellungsbereich 6 zugeordnetes Tor 33 der Laderampe 7 zugewiesen werden, wo der LKW-Fahrer die kommissionierten Wareneinheiten 9,10 entsprechend selbstständig in den LKW 8 laden kann.

Dies wird insbesondere durch die im gezeigten Ausführungsbeispiel verwendeten Schwer- kraft - Förderbahnen 5 im Bereitstellungsbereich 6 ermöglicht, die ein automatisches Nachführen der Wareneinheiten zu einem Entnahmepunkt 34 für den LKW-Fahrer sorgen. Entsprechend muss der LKW-Fahrer lediglich an der Entnahmestelle 34 die einzelnen Wareneinheiten 9,10 beispielsweise mit einem Handhubwagen aufnehmen, und in der vorgegebenen Reihenfolge in seinen LKW überführen, um einen beladenen LKW 8 zu erhalten, der die Wa- reneinheiten in einem gewünschten Ladeschema enthält.

Da durch die Zuordnung eines LKWs 8 zu einem bestimmten Tor 33 des Warenausgangs bzw. zu einem bestimmten Bereitstellungsbereich 6 klar definiert ist, welche Wareneinheiten 9,10 in den LKW 8 zu verladen sind, ist kein zusätzliches Personal von Seiten der Kommissionieranlage notwendig, um den Warenausgang zu organisieren. Darüber hinaus kann eine automatisierte Anzeige oder ein Ausdruck von Beladeinformationen für den LKW - Fahrer automatisch bereitgestellt werden.

Wie aus der Figur 1 zu entnehmen ist, können mehrere Schwerkraft - Förderbahnen 5 des Bereitstellungsbereichs einem Tor 33 des Warenausgangs zugeordnet sein. Die Anzahl der entsprechenden Schwerkraft - Förderbahnen 5 richtet sich nach den örtlichen Gegebenheiten, wie der Anzahl der Wareneinheiten 9,10, die im Bereitstellungsbereich bereitgehalten werden sollen und ist innerhalb der gegebenen Rahmenbedingungen variabel.

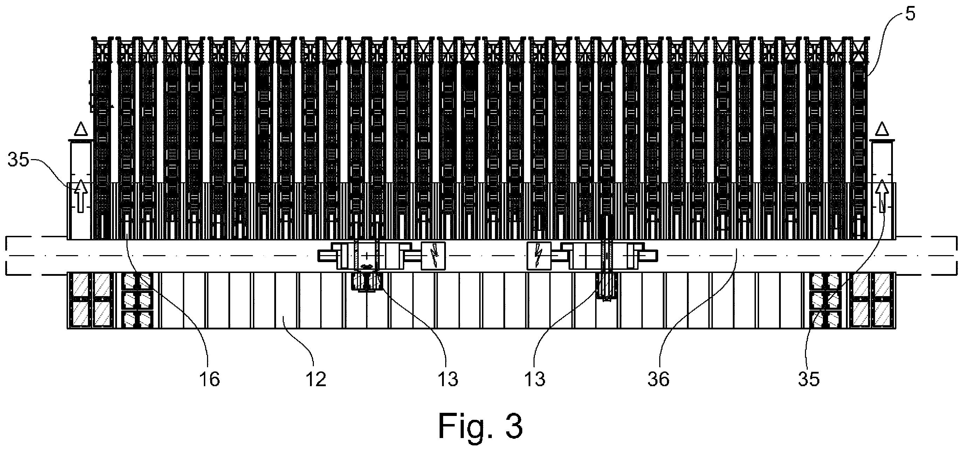

Die Figur 3 zeigt einen Horizontalschnitt durch den Warenausgangspuffer 3, wie er in Figur 2 gezeigt ist, und zwar im Bereich der untersten Regalfächer bzw. der Ausgangsstellen 16. In der Draufsicht wird deutlich, dass entlang der Lagergasse 36 zwei Regalbediengeräte 13 verfahrbar angeordnet sind, welche einerseits die Regalfächer 12 und andererseits die Ausgabestellen 16 zur Übergabe der Wareneinheiten in den Bereitstellungsbereich 6 sowie Einlagerungsstelle 15 bedienen. Zusätzlich sind in der Figur 3 links und rechts von den Schwerkraft - Förderbahnen 5 zwei zusätzliche Auslagerungsstrecken 35 vorgesehen, über die spezielle Waren oder Sonderfälle bereitgestellt werden können.

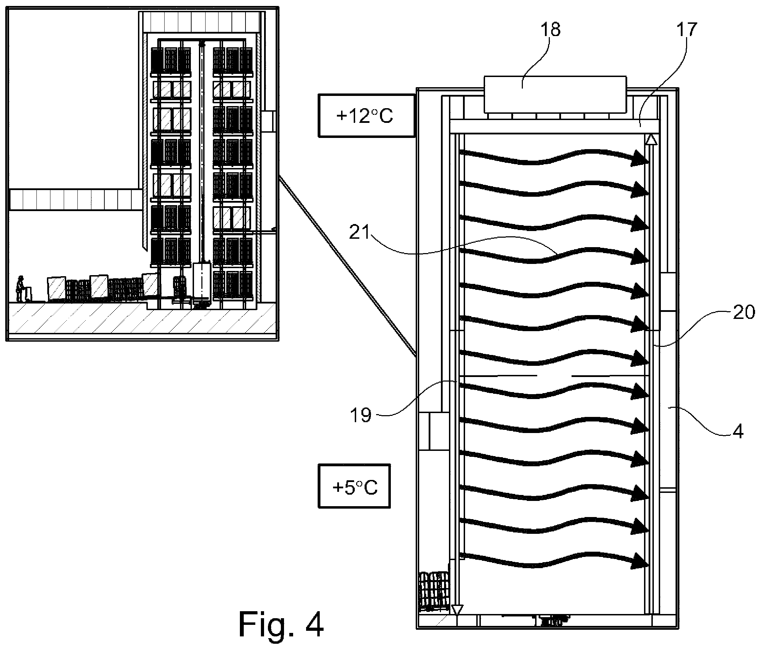

Die Figur 4 zeigt in einer Detailansicht der Figur 2 eine Ausführungsform des Lagerbereichs 4, bei der dieser ein Wärme isolierendes Gehäuse 17 aufweist, welches unmittelbar die Regalfächer abschließt und sowohl die Lagergasse, als auch die Einlagerungsstelle 15 und die Ausgabestellen 16 einschließt. In dem Gehäuse 17 sind lediglich an der Einlagerung s stelle 15 und an den Ausgabestellen 16 entsprechende Öffnungen, insbesondere verschließbare Öffnungen vorzusehen.

Das Wärme isolierende Gehäuse 17 dient zur Einstellung der Temperatur im Lagerbereich 4, wozu Klimageräte 18 in Form von Heiz- und/oder Kühlgeräten vorgesehen sind. Ein entsprechendes Temperiermedium, wie beispielsweise Luft, kann durch die Klimageräte 18 auf die gewünschten Temperarturen gebracht werden und in das Gehäuse 17 eingeführt werden, um dort die gewünschten Temperaturen einzustellen.

Insbesondere kann das im Ausführungsbeispiel der Figur 4 gezeigte Palettenregallager mehrere Klimazonen aufweisen, sodass im Palettenregallager unterschiedlichen Waren, wie beispielsweise temperaturempfindliche Waren, die gekühlt werden müssen, vorgesehen werden können. Bei dem gezeigten Ausführungsbeispiel ist das als Hochregallager ausgeführte Palettenregallager in mehrere Klimazonen eingeteilt, wobei im oberen Bereich wärmere Zonen und im unteren Bereich kühlere Zonen vorgesehen sind. Beispielsweise kann die Temperatur im oberen Bereich des Palettenregallagers auf ca. 12°C eingestellt werden, während im unteren Bereich des Palettenregallagers eine Temperatur von 5°C eingestellt werden kann. Dies kann beispielsweise dadurch erreicht werden, dass über Leitungen 19,20 das Temperiermedium, wie beispielsweise Kühl- und/oder Heizluft in das Innere des Gehäuses 17 abgegeben wird und auf einer gegenüberliegenden Seite entsprechende wieder abgesaugt wird, sodass sich horizontale Strömungen der Temperiermedien ergeben. Dadurch können unterschiedliche Zonen mit verschiedenen Temperarturen eingestellt werden.

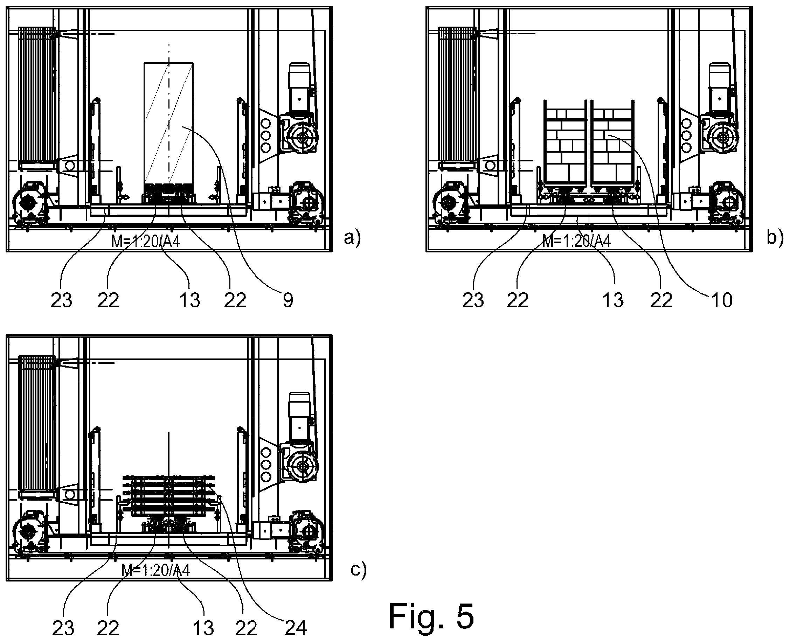

Die Figuren 5 a) bis c) zeigen ein Regalbediengerät 13, wie es im Lagerbereich 4 des Warenausgangspuffers eingesetzt werden kann. Das Lagerbediengerät 13 umfasst eine Wareneinheitenaufnahme 23, auf welcher Hebemittel 22 in Form von Zinken angeordnet sind, die senkrecht zur Bildebene teleskopierbar sind, um in die Regalfächer 12 des Palettenregallagers eingreifen zu können. Darüber hinaus sind jedoch die Hebemittel in Form der Zinken, wie in den Teilbildern a) bis c) der Figur 5 gezeigt ist, auch in ihrem Abstand zueinander verstellbar, um unterschiedliche Wareneinheiten tragen zu können.

In der Figur 5 a) sind die Zinken 22 des Regalbediengeräts 13 in einem engen Abstand zueinander angeordnet, um eine Wareneinheit 9 in Form einer Palette aufzunehmen. Im Teilbild b) der Figur 5 sind die Zinken 22 auseinander gefahren, sodass ein größerer Abstand zwi- sehen ihnen vorliegt, als im Teilbild a) der Figur 5, sodass das Regalbediengerät 13 zwei Rollcontainer nebeneinander auf der Wareneinheitenaufnahme 23 aufnehmen kann.

Im Teilbild c) der Figur 5 ist dargestellt, dass das Regalbediengerät 13 mit den Hebemitteln 23 auch dazu dient, sogenannte "slave"-Paletten aufzunehmen, die dazu dienen, Rollcontainer im Regal zu lagern.

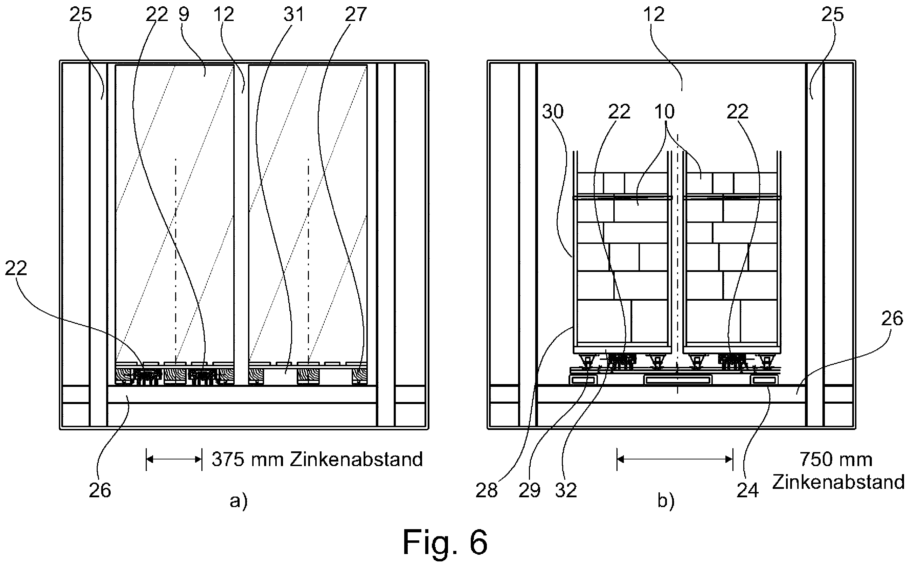

Die Figur 6 zeigt in den Teilbildern a) und b) die Lagerung der unterschiedlichen Wareneinheiten 9,10 im Palettenregallager, wobei von dem Palettenregallager bzw. den Regallagern jeweils die vertikalen Stützen 25 und die Querstreben bzw. Bodenplatten 26 zu sehen sind. In Figur 6 a) sind Paletten im Regalfach 12 gelagert, wobei dargestellt ist, dass die linke Palette mit den Hebemitteln 22 des Regalfahrzeugs 13 gerade ein- oder ausgelagert wird. Hierzu weist die Palette 27 der Paletten - Wareneinheit 9 Freiräume 31 auf, in die die Zinken 22 des Regalbediengeräts eingreifen können.

In Figur 6 b) ist dargestellt, dass zwei Wareneinheiten 10 auf Basis von Rollcontainern 28 nebeneinander auf einer sogenannten "slave"-Palette 24 angeordnet sind, wobei die Zinken 22 mit vergrößertem Abstand, wie in Figur 5 gezeigt, die Rollcontainer 28 gleichzeitig entnehmen können. Die Rollcontainer 28 weisen eine Bodenplatte 32 und seitliche Stützwände 30 sowie Rollen 29 auf, die es ihnen ermöglichen, gefahren zu werden. Die Rollen 29 sind in entsprechenden Vertiefungen der Slave-Palette 24 während der Lagerung aufgenommen.

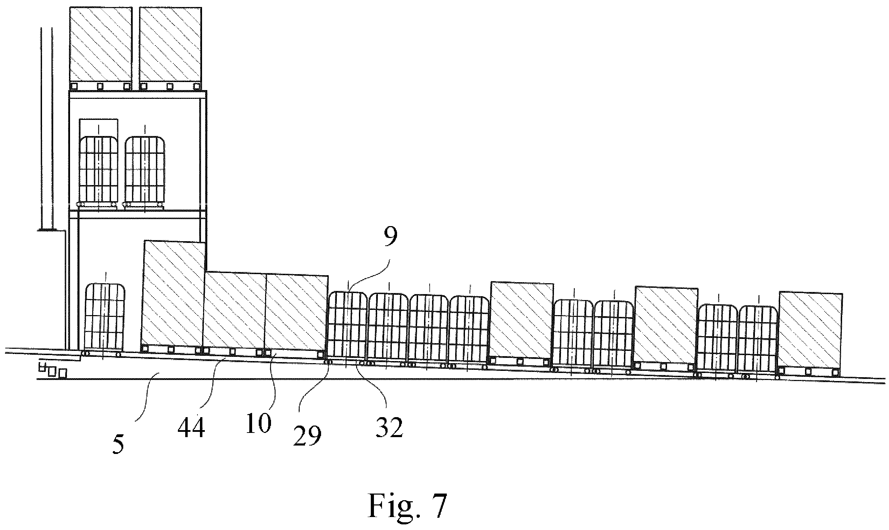

Die Figur 7 zeigt in einer Seitenansicht eine Schwerkraft - Förderbahn 5, wie sie in dem Bereitstellungsbereich 6 des Warenausgangspuffers 3 vorgesehen sein können.

Auf der in Fig. 7 gezeigten ersten Ausführungsform einer erfindungsgemäßen Schwerkraft - Förderbahn 5 in Form einer Rollenbahn können gleichzeitig oder nacheinander unterschiedliche Wareneinheiten 9, 10 auf Basis von Rollcontainern und EU-Standardpaletten transportiert werden. Der Transport erfolgt dabei durch die Schwerkraft der Wareneinheiten 9, 10 und der geneigten Anordnung der Rollenbahn 5.

In der Seitenansicht ist eine Strebe 44 der Schwerkraft - Rollenbahn 5 gezeigt, die deutlich geneigt gegenüber der Horizontalen verläuft, und zwar von der linken Bildseite zur rechten Bildseite von oben nach unten. Entsprechend werden die Wareneinheiten 9, 10 durch die Schwerkraft aufgrund ihres Eigengewichts und der auf den Rollcontainern oder den Paletten befindlichen Waren auf der Rollenbahn 5 in der Fig. 1 nach rechts bewegt.

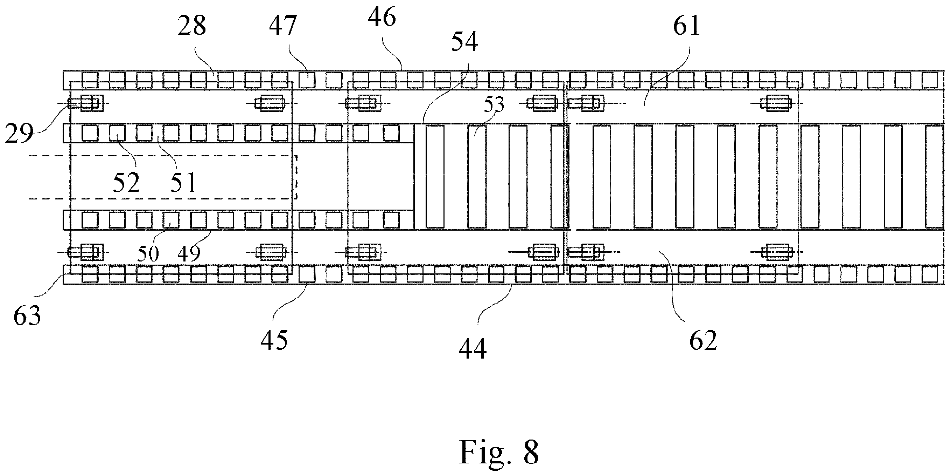

Die Fig. 8 zeigt eine Draufsicht auf die Schwerkraft - Rollenbahn 5 aus Fig. 7. Im unteren Bildbereich der Fig. 8 ist die Strebe 44 zu erkennen, in der eine Vielzahl von Rollen 45 angeordnet sind, die frei drehbar in der Strebe 44 gelagert sind. Parallel zur Strebe 44 ist eine Strebe 46 beabstandet zur Strebe 44 angeordnet und weist ebenfalls eine Vielzahl von Rollen 47 auf, die wiederum frei drehbar in der Strebe 46 gelagert sind. Zwischen den Streben 44 und 46 sind in einem Teilbereich der Schwerkraft - Rollenbahn 5 zwei weitere Streben 49 und 51 angeordnet, während in einem anderen Teilbereich der Schwerkraft - Rollenbahn 5 eine Platte 54 vorgesehen ist. Sowohl in den Streben 49 und 51 als auch in der Platte 54 sind wiederum frei drehbar eine Vielzahl von Rollen 50, 52, 53 hintereinander entlang der Transportrichtung gelagert. Zwischen den Streben 46 und 51 bzw. zwischen der Strebe 46 und der Platte 53 ist eine Ausnehmung 61 ausgebildet, während zwischen der Strebe 44 und der Strebe 49 sowie zwischen der Strebe 44 und der Platte 54 eine Ausnehmung 62 vorgesehen ist. Die Ausnehmungen 61 und 62 sind durchgehend entlang der gesamten Länge der Schwerkraft - Rollenbahn 5 entlang der Transportrichtung vorgesehen, wobei die Ausnehmungen 61 und 62 einen ausreichend tiefen Freiraum zur Verfügung stellen, um die Räder 29 der Rollcontainer 28 aufzunehmen, wenn die Rollcontainer 28 auf den Rollenbahnen 44, 45; 46, 47; 49, 50; 51, 52 und 53, 54 mit ihrer Bodenplatte 32 (siehe Fig. 7) gelagert sind.

Die Rollen 45, 47, 50, 52, 53 sind in den Streben 44, 46, 49, 51 und der Platte 54 so gelagert, dass sie eine einheitliche Transportebene definieren, was bedeutet, dass sie so angeordnet sind, dass ein ebener Gegenstand, der auf den Rollen 45, 47, 50, 52 und 53 abgelegt wird, Rollen aller Rollenbahnen berührt.

Alternativ könnten die Transportebenen für die einzelnen Rollenbahnen 44, 45; 46, 47; 49, 50; 51, 52; 53, 54 unterschiedliche Transportebenen definieren, wobei beispielsweise Rollenbahnen zur Definierung eines Transportbereichs zusammengefasst werden könnten, wie beispielsweise die Rollenbahnen 44, 45 und 46, 47, sodass eine Art von Träger, beispielsweise die Rollcontainer 28 lediglich auf diesen Rollenbahnen bewegt werden, während eine zweite Art von Träger, beispielsweise die EU-Standardpaletten 27 auf den Rollenbahnen 49, 50 und 51, 52 bzw. 53, 54, welche dann eine unterschiedliche Transportebene definieren könnten.

Im gezeigten Ausführungsbeispiel der Fig. 8 liegen die Rollcontainer 28 mit ihren Grundplatten 32 auf den Rollenbahnen 44, 45; 46, 47, sowie 49, 50 und 51, 52 oder 53, 54 auf und werden aufgrund der frei drehbaren Rollen durch ihre Schwerkraft entsprechend der Neigung der Schwerkraft - Rollenbahn transportiert, wobei die Räder 29 auf der Unterseite der Rollcontainer 28 in den Ausnehmungen 61 und 62 berührungslos mitgeführt werden.

Die EU-Standardpaletten können entweder nur von den mittleren Rollenbahnen 49, 50 und 51, 52 bzw. 53, 54 oder ebenfalls von allen Rollenbahnen 49, 50; 51, 52; 53, 54 oder nur den äußeren Rollenbahnen 44, 45 und 46, 47 gelagert und aufgrund der frei drehbaren Rollen 45, 47, 50, 52, 53 entsprechend der Neigung der Schwerkraft-Rollenbahn 1 bewegt werden.

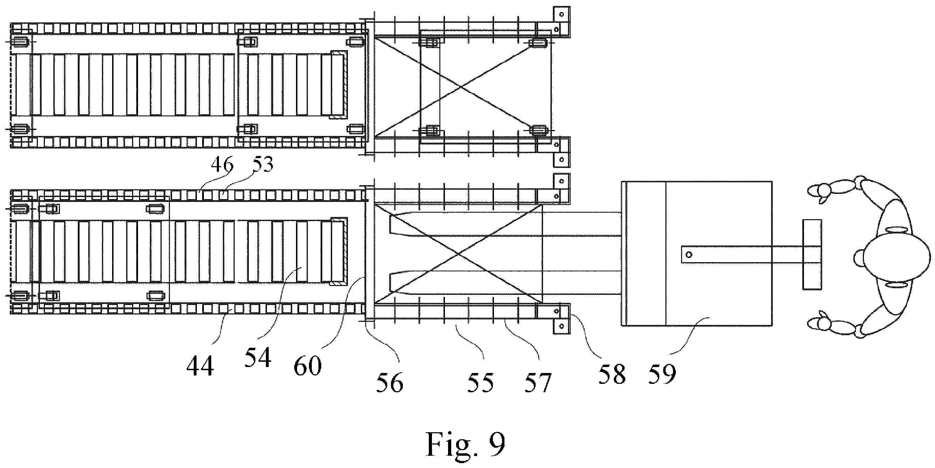

Am Ende der Schwerkraft - Rollenbahn 5, welches in Fig. 9 am Beispiel einer von zwei nebeneinander liegenden Schwerkraft - Rollenbahnen 5 näher beschrieben wird, befindet sich eine Übergabestation 55, an welcher die dorthin transportieren Wareneinheiten 9, 10, also die Rollcontainer 8 oder die EU-Standardpaletten 27 beispielsweise an Hubwagen zur Beladung von LKWs übergeben werden. Während für die EU-Standardpaletten, die mit ihren Auflage-flächen auf den Rollen der Rollenbahnen gelagert waren, Gleitschienen 57 ausreichen, auf denen die EU-Standardpaletten mittels ihrer Restbewegungsenergie bis zum Ende der Schwerkraft - Rollenbahn 5 gleiten können und durch die Reibung bei der Gleitbewegung entsprechend abgebremst werden, können insbesondere für die Rollcontainer zusätzliche Bremseinrichtungen vorgesehen sein. Beispielsweise kann auch für die EU-Standardpaletten zusätzlich ein Anschlag 58 als Bremseinrichtung vorgesehen sein, der eine letztendliche Abbremsung der EU-Standardpaletten ermöglicht.

In gleicher Weise können auch die Rollcontainer 28 abgebremst werden, wobei hier jedoch vorteilhaft ist, wenn die Rollcontainer 28 an der Übergabestation 55 bereits auf ihren Rädern gelagert sind, um ein einfaches Wegrollen der Rollcontainer 28 aus der Übergabestation 55 zu ermöglichen. Aus diesem Grund kann für die Rollcontainer 28 eine separate Bremseinrichtung (nicht gezeigt) in Form einer Bremswippe oder dergleichen vorgesehen sein, welche die Bewegung der Rollcontainer 28 abbremst, aber anschließend ein einfaches Entfernen der Rollcontainer aus der Übergabestation 55 durch Zurückkippen der Wippe ermöglicht.

Damit die separate Bremseinrichtung für die Rollcontainer 28 aktiviert werden kann, kann zusätzlich eine Identifizierungseinrichtung 56 vorgesehen sein, mittels der identifiziert werden kann, welche Art von Wareneinheit sich gerade der Übergabestation 55 am Ende der

Schwerkraft - Rollenbahn 5 nähert. Dies kann durch verschiedene elektronische, mechanische oder elektromechanische Systeme realisiert werden, wobei in Fig. 9 ein einfaches mechanisches System in der Weise dargestellt ist, dass eine verschwenkbare Stange 60 quer über die Schwerkraft - Rollenbahn 5 am Übergang zur Übergabestation 55 vorgesehen ist, welche durch die Räder 29 eines Rollcontainers 28 bewegt, also beispielsweise nach unten gedrückt werden kann, sodass durch diese Bewegung der Stange 60 eine mechanische Auslösung einer Bremseinrichtung, beispielsweise in Form einer Bremswippe, ausgelöst werden kann.

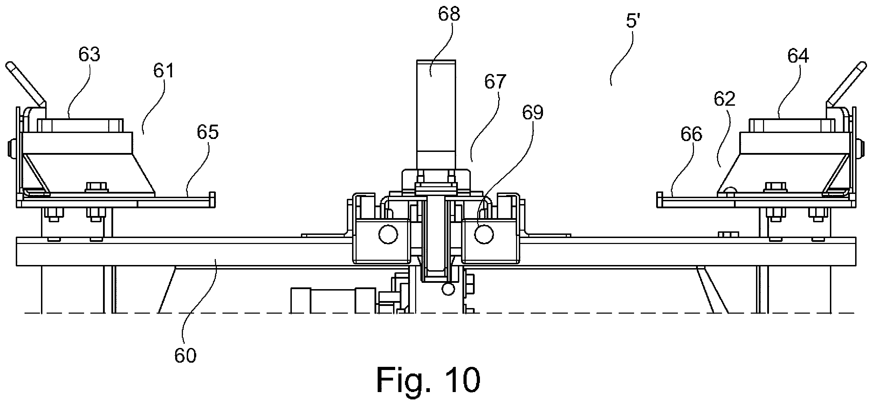

Die Figuren 10 bis 15 zeigen eine zweite Ausführungsform einer Schwerkraft - Förderbahn 5', bei welcher für den Transport der Rollcontainer 28 keine Rollenbahn, sondern eine Fahrbahn mit Fahrbahnflächen 65,66 vorgesehen ist. Die Figur 10 ist eine Seitenansicht einer dementsprechenden Schwerkraft- Förderbahn 5' mit Blickrichtung in Transportrichtung gezeigt, wobei auf einen Grundträger 60 zwei Schienenanordnungen 61,62 angeordnet sind, die einerseits Rollenbahnen 63,64, und andererseits die Fahrbahnen 65,66 umfassen. Auf den Rollenbahnen 63,64 können die EU-Standard-Paletten befördert werden, während auf den Fahrbahnen 65,66 die Rollcontainer 28 mit ihren Rädern 29 fahren können. Um zu gewährleisten, dass die auf der Schwerkraft - Förderbahn 5' abgelegten Wareneinheiten 9,10 sich auch tatsächlich entlang der geneigten Bahn bewegen, ist ein Mitnehmerwagen 67 vorgesehen, der entlang der Transportrichtung der Schwerkraft - Förderbahn 5' sowohl in Transportrichtung als auch entgegengesetzt zur Transportrichtung bewegt werden kann.

Der Mitnehmerwagen 67 weist einen Transportwagen oder Schlitten 69 auf, der auf dem Gestell 60 bewegbar angeordnet ist. Beispielsweise kann der Wagen oder Schlitten 69 entlang einer Schienenanordnung gleiten oder über Rollen fahrbar gelagert sein. Darüber hinaus ist auch eine Anordnung an einer Förderkette oder dergleichen denkbar. Der Transport des Mitnehmerwagens 67 kann durch verschiedene Antriebsmittel, wie beispielsweise Förderketten, Elektromotoren und dergleichen realisiert werden.

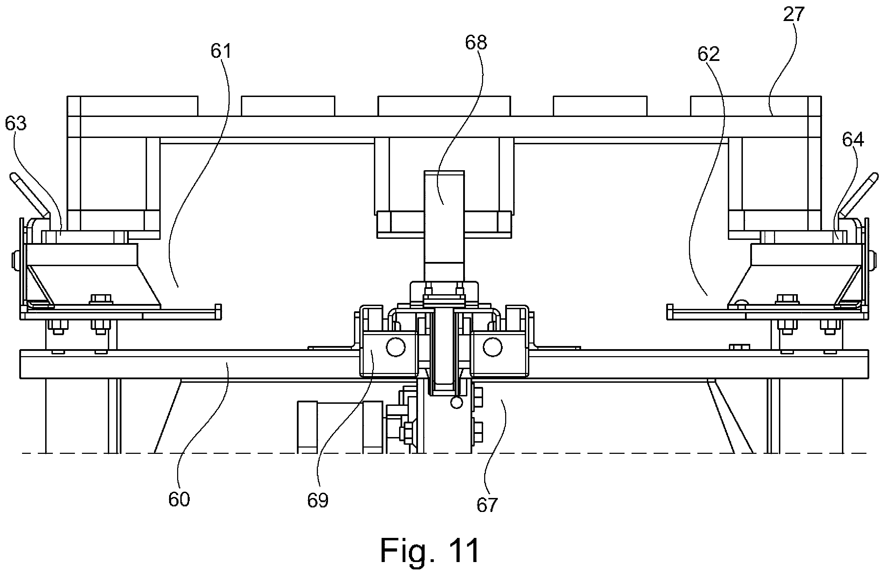

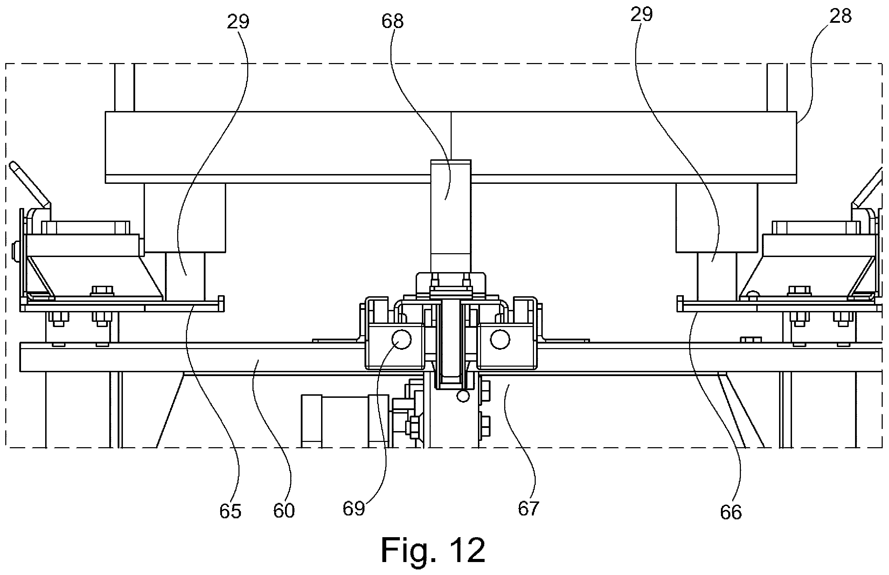

An dem Wagen oder Schlitten 69 ist ein klappbarer Mitnehmer 68 angeordnet, der durch eine Federeinrichtung in die ausgeklappte Position, wie sie in den Figuren 10 bis 12 dargestellt ist, vorgespannt ist. Der Mitnehmer 68 kann in einer Richtung, die der Transportrichtung auf der Schwerkraft - Förderbahn 5' entspricht, auf den Wagen oder Schlitten 69 zu eingeklappt werden, während ein Klappen in die andere Richtung nicht möglich ist. Entsprechend kann der Mitnehmer 68 in der aufgeklappten Position, wenn er gegen eine EU - Standard - Palette 27 oder einem Rollcontainer 28 anliegt, diese entsprechend anschieben. Dies ist in den Figuren 11 und 12 gezeigt, die die Schwerkraft - Förderbahn 5' beim Betrieb mit einer EU - Standard - Palette (Figur 11) und einem Rollcontainer 28 (Figur 12) zeigen.

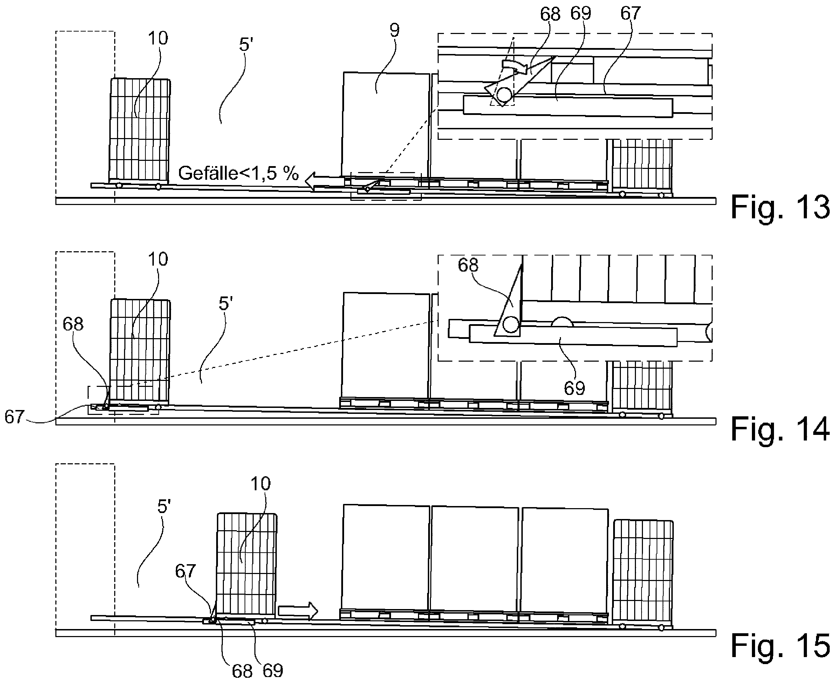

Das Wirkprinzip des Mitnehmerwagens 67 mit dem klappbaren Mitnehmer 68 ist in den Figuren 13 bis 15 dargestellt. In Figur 13 ist gezeigt, dass bereits mehrere Wareneinheiten 9, 10 das Ende der Schwerkraft - Förderbahn 5' erreicht haben, während eine Wareneinheit 10 noch am Anfang der Schwerkraft - Förderbahn 5' angeordnet ist. Um zu erreichen, dass die Wareneinheit 10 ebenfalls in der Transportrichtung transportiert wird, wenn das Gefälle der Schwerkraft - Förderbahn zum selbstständigen Transport nicht ausreichen sollte, wird der Mitnehmerwagen 67 in Richtung des Anfangs der Schwerkraft - Förderbahn 5' bewegt, wobei er sich unter den bereits am Ende der Schwerkraft - Förderbahn 5' befindlichen Wareneinheiten 9,10 einklappt. Dies ist in Figur 13 gezeigt. Nach Erreichen des Anfangs der Schwerkraft - Förderbahn 5', wird der einklappbare Mitnehmer 68 aufgrund der Federvorspannung ausgeklappt und kann an dem Rollcontainer bzw. der Wareneinheit 10 anliegen. Durch die Bewegung des Mitnehmerwagens 67 in Richtung des Endes der Schwerkraft - Förderbahn 5' wird die Wareneinheit 10 angeschoben und ebenfalls in Richtung des Endes der Schwerkraft - Förderbahn 5' bewegt. Dadurch kann gewährleistet werden, dass sich sämtlich Wareneinheiten 9, 10 in lückenloser Reihenfolge am Ende der Schwerkraft - Förderbahn 5' angeordnet sind.

## Patentansprüche

1. Warenausgangspuffer einer Kommissionieranlage, in der Waren zu Wareneinheiten kommissioniert werden, mit mindestens einem Lagerbereich (4), in dem die kommissionierten Wareneinheiten (9,10) gelagert werden, bevor sie die Kommissionieranlage verlassen, wobei:
der Warenausgangspuffer weiterhin mindestens einen Bereitstellungsbereich (6) und mindestens eine automatisierte Bedieneinrichtung (13) umfasst, wobei in dem Bereitstellungsbereich die kommissionierten Wareneinheiten entsprechend einer vorgegebenen Reihenfolge automatisch durch die Bedieneinrichtung bereitgestellt werden,
der Bereitstellungsbereich mindestens eine Schwerkraft-Förderbahn und die Bedieneinrichtung ein Regalbediengerät umfasst,
**dadurch gekennzeichnet, dass**
das Regalbediengerät zum Bedienen von Wareneinheiten (9,10) mit einer Mehrzahl von Waren, die auf unterschiedlichen Trägern gelagert sind, ausgebildet ist, wobei das Regalbediengerät (13) zweidimensional in einer Bewegungsebene parallel zu einem Regal verfahrbar ist und mindestens eine quer zur Bewegungsebene verfahrbare Hebeeinheit zum Heben und Tragen der verschiedenen Träger aufweist, wobei die Hebeeinheit zur Anpassung an verschiedene Träger in sich verstellbar ausgebildet ist, und
die Hebeeinheit zwei Zinken (22) aufweist, die quer zur Bewegungsrichtung des Regalbediengeräts in einer Ausfahrrichtung ausfahrbar sind und in ihrem Abstand zueinander quer zur Ausfahrrichtung verstellbar sind, und wobei das Regalbediengerät (13) so hergerichtet und einstellbar ist, dass es Euro-Paletten und Rollcontainer und sonstige Trägerpaletten und je nach Einstellung mindestens zwei Rollcontainer tragen kann.

2. Warenausgangspuffer nach Anspruch 1,
wobei das Bediengerät (13) in Bezug auf den Lagerbereich und den Bereitstellungsbereich so angeordnet ist, dass kommissionierte Wareneinheiten mit dem Bediengerät automatisiert aus dem Lagerbereich in den Bereitstellungsbereich überführt werden können.

3. Warenausgangspuffer nach Anspruch 1,
wobei die Zinke (22) eine Breite aufweist, die sich quer zur Ausfahrrichtung erstreckt und so dimensioniert ist, dass ein Träger sicher gehalten ist.

4. Warenausgangspuffer nach einem der Ansprüche 1 bis 3,
wobei die Schwerkraft-Förderbahn eine Transportbahn aufweist, welche geneigt zur Waagrechten angeordnet ist und Transportmittel umfasst, so dass auf der Transportbahn anordenbare Träger zumindest teilweise durch die Schwerkraft bewegt werden, wobei die Transportbahn so hergerichtet ist, dass mindestens erste, selbstfahrende Träger (28) mit Rädem an ihrer Unterseite und mindestens zweite, nicht-selbstfahrende Träger (27) mit Auflage-flächen an ihrer Unterseite auf der Schwerkraft-Förderbahn gleichzeitig befördert werden können, wobei die Träger mit ihrer Unterseite zur Transportbahn ausgerichtet angeordnet sind, wobei die Schwerkraft-Förderbahn mindestens ein durch einen Motor angetriebenes Schiebeelement (67) aufweist, das entlang der Transportbahn bewegbar ist, so dass zusätzlich mindestens eine Art von Trägern auf der Transportbahn angeschoben werden kann.

5. Warenausgangspuffer nach Anspruch 4,
wobei das Schiebeelement (67) in Transportrichtung und entgegengesetzt dazu bewegbar ist, wobei das Schiebeelement (67) so ausgebildet ist, dass es lediglich in Transportrichtung die Schiebefunktion aufweist und in entgegengesetzter Richtung keine Schiebefunktion besitzt und an auf der transportbahn befindlichen Trägern vorbei bewegbar ist und insbesondere in Transportrichtung einklappbar ist.

6. Warenausgangspuffer nach Anspruch 4oder 5,
wobei die Transportbahn durch die Träger selbst antreibbare Transportmittel umfasst.

7. Warenausgangspuffer nach einem der Ansprüche 4 bis 6,
wobei die Transportbahn mindestens ein Element aus der Gruppe aufweist, die Endlosbänder, Rollen, Räder, Fahrbahnen und Gleitelemente umfasst, wobei insbesondere die Endlos-bänder, Rollen und/oder Räder zumindest teilweise frei drehbar gelagert sind und / oder die Transportbahn mindestens eine Transportebene aufweist, welche zumindest einen Teil der Oberfläche der Transportbahn bildet, auf welcher die Träger gelagert sind.

8. Warenausgangspuffer nach einem der Ansprüche 4 bis 7,
wobei die Transportbahn mindestens drei Transportbereiche aufweist, die sich parallel zueinander entlang der Transportrichtung der Transportbahn erstrecken, wobei jeder Transportbereich Transportmittel aufweist, wobei insbesondere ein oder mehrere Transportbereiche zu Gruppen zusammengefasst sind, wobei jede Gruppe für einen oder mehrere Typen von Trägern ausgebildet ist und vorzugsweise die Träger Rollcontainer (28) und EU-Paletten (27) sind.

9. Warenausgangspuffer nach Anspruch 8,
wobei die Transportbereiche zumindest teilweise unterschiedliche Transportebenen aufweisen, die gegeneinander versetzt sind und / oder die Transportbereiche durch ein oder mehrere Ausnehmungen voneinander getrennt sind, die sich parallel zu den Transportbereichen entlang der Transportrichtung der Transportbahn erstrecken.

10. Warenausgangspuffer nach Anspruch 9,
wobei die Ausnehmungen entlang der Transportrichtung durchgehend über die gesamte Länge der Transportbahn zwischen benachbarten Transportbereichen einen vorbestimmten Freiraum definieren, so dass die Räder der Träger in den Ausnehmungen berührungsfrei bewegt werden können und/oder das oder die Schiebeelemente verfahrbar aufgenommen werden können.

11. Warenausgangspuffer nach einem der Ansprüche 8 bis 10,
wobei zwei, eine erste Gruppe bildende Transportbereiche vorgesehen sind, die als Transportmittel Rollen umfassen, die in zwei parallelen Rollenbahnen angeordnet sind, und dass zwei weitere, eine zweite Gruppe bildende Transportbereiche vorgesehen sind, die als Transportmittel Fahrbahnen aufweisen, die als zwei parallele Fahrbahnen angeordnet sind.

12. Warenausgangspuffer nach einem der Ansprüche 4 bis 11,
wobei am Ende der Förderbahn mindestens eine Bremseinrichtung zum Abbremsen der Träger vorgesehen ist und/oder am Ende der Förderbahn mindestens eine Identifizierungseinrichtung zur Identifizierung der Träger angeordnet ist, wobei insbesondere Bremseinrichtung und Identifizierungseinrichtung so ausgebildet sind, dass sie derart zusammenwirken, dass die Bremseinrichtung in Abhängigkeit von der Identifizierung des Trägers ausgewählt oder aktiviert wird.

13. Warenausgangspuffer nach einem der Ansprüche 1 bis 12,
wobei das Palettenregallager mindestens zwei Regale, von denen jedes eine Vielzahl von neben-einander und übereinander angeordneten Regalfächern (12) aufweist, in denen die kommissionierten Wareneinheiten (9,10) gelagert werden können, sowie ein Regalbediengerät (13) aufweist, welches in einer Ebene zwischen den Regalen verfahrbar ist, wobei in mindestens einem Bereich eines Regalfaches ein Ende einer Schwerkraft-Förderbahn angeordnet ist und/oder das Palettenregallager ein Klimatisierungsgehäuse umfasst, so dass die Regalfächer bei zur Umgebungstemperatur unterschiedlicher Temperatur und/oder bei zueinander unterschiedlichen Temperaturen betreibbar sind.

14. Warenausgangspuffer nach einem der Ansprüche 1 bis 13,
wobei das Palettenregallager Klimageräte (18) umfasst und/oder das Palettenregallager unter-schiedliche Klimazonen umfasst, die vorzugsweise mit steigender Temperatur von unten nach oben angeordnet sind.

15. Warenausgangspuffer nach einem der Ansprüche 13 oder 14,
wobei in dem Klimatisierungsgehäuse (17) eine oder mehrere Luftströmungen einstellbar sind.

16. Kommissionieranlage mit einem Warenausgangspuffer nach einem der vorhergehenden-Ansprüche.

17. Verfahren zur Ausgabe von kommissionierten Wareneinheiten aus einer Kommissionieranlage, in der verschiedene Waren zu Wareneinheiten zusammengestellt werden, mit folgenden Schritten:
Bereitstellung eines Warenausgangspuffers nach einem der Ansprüche 1 bis 15,
Zuführen zumindest eines Teils der kommissionierten Wareneinheiten in den Warenausgangspuffer,
Einlagern zumindest eines Teils der dem Warenausgangspuffer zugeführten Wareneinheiten in einen Lagerbereich des Warenausgangspuffers,
Auslagern einer Sequenz von Wareneinheiten aus dem Lagerbereich in einen Bereitstellungsbereich des Warenausgangspuffers und Lagern der Wareneinheiten in der entsprechenden Sequenz und
Ausgeben der Wareneinheiten aus dem Bereitstellungsbereich in der durch die Sequenz festgelegten Reihenfolge.

18. Verfahren nach Anspruch 17,
wobei das Einlagern und Auslagern der Wareneinheiten in den Lagerbereich automatisiert erfolgt.

19. Verfahren nach einem der Ansprüche 17 oder 18,
wobei das Ausgeben der Wareneinheiten aus dem Bereitstellungsbereich schrittweise durch Wegführen einzelner Wareneinheiten aus einer Übergabeposition erfolgt, wobei weitere auszugebende Wareneinheiten automatisch und zwangsweise in die Übergabeposition nachgeführt werden.

## Claims

1. Shipping buffer of a picking system in which goods are picked into goods units, with at least one storage area (4) in which the picked goods units (9, 10) are stored before they leave the picking system, wherein:
the shipping buffer further comprises at least one staging area (6) and at least one automated operating device (13), wherein the picked goods units are automatically staged in the staging area by the operating device in accordance with a predetermined sequence,
the staging area comprises at least one gravity conveyor and the handling device comprises a storage and retrieval machine,
**characterized in that**
the storage and retrieval machine is designed to handle goods units (9, 10) with a plurality of goods stored on different carriers, wherein the storage and retrieval machine (13) being movable in two dimensions in a plane of movement parallel to a rack and having at least one lifting unit movable transversely to the plane of movement for lifting and carrying the various carriers, the lifting unit being designed to be adjustable to accommodate different carriers, and
the lifting unit has two forks arms (22) which can be extended transversely to the direction of movement of the rack-serving device in an extension direction and whose distance from each other can be adjusted transversely to the extension direction, and wherein the storage and retrieval machine (13) is designed and adjustable so that it can carry Euro pallets and roll containers and other carrier pallets and, depending on the setting, at least two roll containers.

2. Shipping buffer according to claim 1,
wherein the storage and retrieval machine (13) is arranged in relation to the storage area and the staging area such that picked goods units can be automatically transferred from the storage area to the staging area using the storage and retrieval machine.

3. Shipping buffer according to claim 1,
wherein the fork arms (22) has a width that extends transversely to the extension direction and is dimensioned such that a carrier is held securely.

4. Shipping buffer according to one of claims 1 to 3,
wherein the gravity conveyor track has a transport track which is inclined to the horizontal and comprises transport means such that carriers which can be arranged on the transport track are moved at least partially by gravity, wherein the transport track is designed such that at least first, self-propelled carriers (28) with wheels on their underside and at least second, non-self-propelled carriers (27) with support surfaces on their underside can be transported simultaneously on the gravity conveyor, wherein the carriers are arranged with their underside aligned with the transport track, wherein the gravity conveyor comprises at least one motor-driven pushing element (67) which is movable along the transport track, so that at least one additional type of carrier can be pushed along the transport track.

5. Shipping buffer according to claim 4,
wherein the pushing element (67) is movable in the transport direction and in the opposite direction, wherein the pushing element (67) is designed such that it only has a pushing function in the transport direction and has no pushing function in the opposite direction and can be moved past carriers located on the conveyor, and in particular can be folded in the transport direction.

6. Shipping buffer according to claim 4 or 5,
wherein the conveyor path comprises transport means that can be driven by the carriers themselves.

7. Shipping buffer according to one of claims 4 to 6,
wherein the conveyor path comprises at least one element from the group comprising endless belts, rollers, wheels, tracks and sliding elements, wherein in particular the endless belts, rollers and/or wheels are at least partially freely rotatably mounted and/or the conveyor belt comprises at least one conveyor plane which forms at least part of the surface of the conveyor belt on which the carriers are mounted.

8. Shipping buffer according to any one of claims 4 to 7,
wherein the conveyor path has at least three conveyor sections extending parallel to each other along the conveyor direction of the conveyor belt, each conveyor section having conveyor means, wherein in particular one or more conveyor sections are combined into groups, each group being designed for one or more types of carriers, and preferably the carriers are roll containers (28) and EU pallets (27).

9. Shipping buffer according to claim 8,
wherein the transport areas have at least partially different transport levels which are offset relative to each other and/or the transport areas are separated from each other by one or more recesses which extend parallel to the transport areas along the transport direction of the transport track.

10. Shipping buffer according to claim 9,
wherein the recesses define a predetermined clearance along the transport direction over the entire length of the conveyor path between adjacent transport areas, so that the wheels of the carriers can be moved in the recesses without contact and/or the sliding element or elements can be accommodated in a movable manner.

11. Shipping buffer according to one of claims 8 to 10,
wherein two transport areas forming a first group are provided, which comprise rollers as transport means, which are arranged in two parallel roller conveyors, and wherein two further transport areas forming a second group are provided, which comprise tracks as transport means, which are arranged as two parallel tracks.

12. Shipping buffer according to one of claims 4 to 11,
wherein at least one braking device for braking the carriers is provided at the end of the conveyor path and/or at least one identification device for identifying the carriers is arranged at the end of the conveyor path, wherein in particular the braking device and the identification device are designed to interact in such a way that the braking device is selected or activated depending on the identification of the carrier.

13. Shipping buffer according to one of claims 1 to 12,
wherein the pallet rack storage system has at least two racks, each of which has a plurality of rack compartments (12) arranged next to and above each other, in which the picked goods units (9, 10) can be stored, and a rack serving device (13) which can be moved in a plane between the racks, wherein an end of a gravity conveyor track is arranged in at least one area of a rack compartment and/or the pallet rack storage comprises an air-conditioning housing so that the rack compartments can be operated at temperatures different from the ambient temperature and/or at temperatures different from each other.

14. Shipping buffer according to one of claims 1 to 13,
wherein the pallet rack warehouse comprises air conditioning units (18) and/or the pallet rack warehouse comprises different climate zones, which are preferably arranged from bottom to top with increasing temperature.

15. Shipping buffer according to one of claims 13 or 14,
wherein one or more air flows can be adjusted in the air conditioning housing (17).

16. Order picking system with a shipping buffer according to one of the preceding claims.

17. Method for dispensing picked goods units from a picking system in which different goods are assembled into goods units, comprising the following steps:
provision of a shipping buffer according to one of claims 1 to 15,
feeding at least part of the picked goods units into the shipping buffer,
storing at least some of the goods units fed into the shipping buffer in a storage area of the shipping buffer,
removing a sequence of goods units from the storage area to a staging area of the shipping buffer and storing the goods units in the corresponding sequence, and
dispensing the goods units from the staging area in the order specified by the sequence.

18. Method according to claim 17,
wherein the storage and retrieval of the goods units into the storage area is automated.

19. Method according to one of claims 17 or 18,
wherein the goods units are dispensed from the staging area step by step by removing individual goods units from a transfer position, wherein further goods units to be dispensed are automatically and forcibly fed into the transfer position.

## Revendications

1. Zone tampon de sortie de marchandises d'une installation de préparation de commandes, dans laquelle des marchandises sont préparées sous forme d'unités de marchandises, avec au moins une zone de stockage (4) dans laquelle les unités de marchandises préparées (9, 10) sont stockées avant de quitter l'installation de préparation de commandes, où :
la zone tampon de sortie de marchandises comprend en outre au moins une zone de mise à disposition (6) et au moins un dispositif de manipulation automatisé (13), où, dans la zone de mise à disposition, les unités de marchandises préparées sont automatiquement mises à disposition par le dispositif de manipulation selon un ordre prédéfini,
la zone de mise à disposition comprend au moins un convoyeur gravitaire et le dispositif de manipulation comprend un transstockeur,
**caractérisé en ce que**
le transstockeur est conçu pour manipuler des unités de marchandises (9, 10) avec une pluralité de marchandises qui sont stockées sur différents supports, où le transstockeur (13) est déplaçable en deux dimensions dans un plan de mouvement parallèle à un rayonnage et comporte au moins une unité de levage déplaçable transversalement au plan de mouvement pour soulever et porter les différents supports, où l'unité de levage est conçue pour être réglable de manière s'adapter à différents supports, et
l'unité de levage comporte deux fourches (22) qui sont déployables dans une direction de déploiement perpendiculaire à la direction de mouvement du transstockeur et dont la distance entre elles est réglable perpendiculairement à la direction de déploiement, et où le transstockeur (13) est conçu et réglable de telle sorte qu'il peut transporter des palettes Euro et des conteneurs roulants et d'autres palettes de transport et, selon le réglage, au moins deux conteneurs roulants.

2. Zone tampon de sortie de marchandises selon la revendication 1,
où le dispositif de manipulation (13) est disposé par rapport à la zone de stockage et à la zone de mise à disposition de telle sorte que des unités de marchandises préparées peuvent être transférées automatiquement de la zone de stockage à la zone de mise à disposition à l'aide du dispositif de manipulation.

3. Zone tampon de sortie de marchandises selon la revendication 1,
où la fourche (22) présente une largeur qui s'étend transversalement à la direction de déploiement et qui est dimensionnée de telle manière qu'un support est maintenu de manière sûre.

4. Zone tampon de sortie de marchandises selon l'une des revendications 1 à 3,
où le convoyeur gravitaire comporte une voie de transport qui est disposée de manière inclinée par rapport à l'horizontale et comprend des moyens de transport, de sorte que les supports pouvant être disposés sur la voie de transport sont au moins partiellement déplacés par la gravité, où la voie de transport est arrangée de telle sorte qu'au moins des premiers supports automoteurs (28) avec des roues sur leur face inférieure et au moins des seconds supports non automoteurs (27) avec des surfaces d'appui sur leur face inférieure peuvent être transportés simultanément sur le convoyeur gravitaire, où les supports sont disposés avec leur face inférieure orientée vers la voie de transport, où le convoyeur gravitaire comporte au moins un élément de poussée (67), entraîné par un moteur, qui est mobile le long de la voie de transport, de sorte qu'au moins un type de supports peut en outre être poussé sur la voie de transport.

5. Zone tampon de sortie de marchandises selon la revendication 4, où
l'élément de poussée (67) est mobile dans la direction de transport et dans la direction opposée, où l'élément de poussée (67) est conçu de telle sorte qu'il n'a une fonction de poussée que dans la direction de transport et n'a pas de fonction de poussée dans la direction opposée, et est mobile au-delà des supports se trouvant sur la voie de transport et peut être replié en particulier dans la direction de transport.

6. Zone tampon de sortie de marchandises selon la revendication 4 ou 5,
où la voie de transport comprend des moyens de transport pouvant être entraînés par les supports eux-mêmes.

7. Zone tampon de sortie de marchandises selon l'une des revendications 4 à 6,
où la voie de transport comporte au moins un élément du groupe comprenant des bandes sans fin, des rouleaux, des roues, des voies de roulement et des éléments coulissants, où en particulier les bandes sans fin, les rouleaux et/ou les roues sont montés au moins en partie de manière librement rotative et/ou la voie de transport comporte au moins un plan de transport qui forme au moins une partie de la surface de la voie de transport sur laquelle sont montés les supports.

8. Zone tampon de sortie de marchandises selon l'une des revendications 4 à 7,
où la voie de transport comporte au moins trois zones de transport qui s'étendent parallèlement les unes aux autres le long de la direction de transport de la voie de transport, où chaque zone de transport comporte des moyens de transport, où en particulier une ou plusieurs zones de transport sont réunies en groupes, où chaque groupe est conçu pour un ou plusieurs types de supports et où les supports sont de préférence des conteneurs roulants (28) et des palettes UE (27).

9. Zone tampon de sortie de marchandises selon la revendication 8,
où les zones de transport comportent au moins partiellement différents plans de transport qui sont décalés les uns par rapport aux autres et/ou les zones de transport sont séparées les unes des autres par un ou plusieurs évidements qui s'étendent parallèlement aux zones de transport le long de la direction de transport de la voie de transport.

10. Zone tampon de sortie de marchandises selon la revendication 9,
où les évidements le long de la direction de transport définissent de manière continue sur toute la longueur de la voie de transport entre des zones de transport voisines un espace libre prédéfini, de sorte que les roues des supports peuvent être déplacées sans contact dans les évidements et/ou que le ou les éléments de poussée peuvent être reçus de manière déplaçable.

11. Zone tampon de sortie de marchandises selon l'une des revendications 8 à 10,
où deux zones de transport formant un premier groupe sont fournies, qui comprennent comme moyen de transport des rouleaux qui sont disposés en deux voies de rouleaux parallèles, et où deux autres zones de transport formant un deuxième groupe sont fournies, qui présentent comme moyen de transport des voies de roulement qui sont disposées en deux voies de roulement parallèles.

12. Zone tampon de sortie de marchandises selon l'une des revendications 4 à 11,
où au moins un dispositif de freinage est fourni à l'extrémité du convoyeur pour freiner les supports et/ou au moins un dispositif d'identification est disposé à l'extrémité du convoyeur pour identifier les supports, où en particulier le dispositif de freinage et le dispositif d'identification sont conçus de telle sorte qu'ils coopèrent de manière à ce que le dispositif de freinage soit sélectionné ou activé en fonction de l'identification du support.

13. Zone tampon de sortie de marchandises selon l'une des revendications 1 à 12,
où le magasin à rayonnages à palettes comprend au moins deux rayonnages, dont chacun présente une pluralité de compartiments de rayonnage (12) disposés les uns à côté des autres et les uns au-dessus des autres, dans lesquels les unités de marchandises préparées (9, 10) peuvent être stockées, ainsi qu'un dispositif de manipulation (13) qui est mobile dans un plan entre les rayonnages, où une extrémité d'un convoyeur gravitaire est disposée dans au moins une zone d'un compartiment de rayonnage et/ou le magasin à rayonnages à palettes comprend un boîtier de climatisation, de sorte que les compartiments de rayonnage peuvent fonctionner à une température différente de la température ambiante et/ou à des températures différentes les uns des autres.

14. Zone tampon de sortie de marchandises selon l'une des revendications 1 à 13,
où le magasin à rayonnages à palettes comprend des appareils de climatisation (18) et/ou le magasin à rayonnages à palettes comprend différentes zones de climatisation, qui sont de préférence disposées de bas en haut avec une température croissante.

15. Zone tampon de sortie de marchandises selon l'une des revendications 13 ou 14,
où un ou plusieurs flux d'air peuvent être réglés dans le boîtier de climatisation (17).

16. Installation de préparation de commandes avec une zone tampon de sortie de marchandises selon l'une des revendications précédentes.

17. Procédé pour distribuer des unités de marchandises préparées à partir d'une installation de préparation de commandes dans laquelle différentes marchandises sont regroupées en unités de marchandises, avec les étapes suivantes :
mise à disposition d'une zone tampon de sortie de marchandises selon l'une des revendications 1 à 15,
acheminement d'au moins une partie des unités de marchandises préparées vers la zone tampon de sortie de marchandises,
stockage d'au moins une partie des unités de marchandises acheminées vers la zone tampon de sortie de marchandises dans une zone de stockage de la zone tampon de sortie de marchandises,
retrait d'une séquence d'unités de marchandises de la zone de stockage vers une zone de mise à disposition de la zone tampon de sortie de marchandises et stockage des unités de marchandises dans la séquence correspondante et
distribution des unités de marchandises depuis la zone de mise à disposition dans l'ordre défini par la séquence.

18. Procédé selon la revendication 17,
où le stockage et le retrait des unités de marchandises dans la zone de stockage s'effectuent de manière automatisée.

19. Procédé selon l'une des revendications 17 ou 18,
où la distribution des unités de marchandises à partir de la zone de mise à disposition s'effectue par étapes, en retirant des unités de marchandises individuelles d'une position de transfert, où d'autres unités de marchandises à distribuer sont automatiquement et nécessairement amenées dans la position de transfert.
